# EUROPEAN PATENT APPLICATION

(11) **EP 0 680 211 A1**
(43) Date of publication of application: **02.11.1995**
(21) Application number: 95302557.4
(22) Date of filing: 18.04.1995
(51) Int. Cl.: H04N 7/15

(54) **A video teleconferencing system**

(30) Priority: 28.04.1994 US 234082
(71) Applicant: AT&T GLOBAL INFORMATION SOLUTIONS INTERNATIONAL INC., Dayton, Ohio 45479 (US)
(72) Inventor: Ratz, R. W., Naperville, IL 60540 (US)
(74) Representative: Robinson, Robert George

(57) **Abstract**

The invention relates to a video teleconferencing system, comprising a first computer (10) connected to a remotely located second computer via a communications link (24). A first video camera (16) is coupled to the first computer (10) for generating first video images for transmission to the remotely located second computer. The first video camera (16) comprises an input jack (36) for accepting analog video signals from an external source; such as a second video camera (18), coupled to said input jack (36) of the first video cameras (16), for generating second video images for transmission to the remotely located second computer.

## Description

The present invention relates to a video teleconferencing system and in particular to a video teleconferencing system utilizing two video cameras.

Video cameras have been in use for some time. Examples of such cameras include hand-held camcorders used by individuals, as well as video cameras used in business and industrial applications. Most of such cameras generate analog video signals.

Many video cameras incorporate digital signal processors (DSPs) to perform video processing functions, but they still generate analog output. As a result, an adaptor board or other device coupled to the camera must include an analog-to-digital convertor to translate the analog signals back into digital signals.

Digital cameras that generate a direct digital output can reduce the cost of video systems by directly connecting to the input of the adapter board. Such direct connection eliminates the cost of a digital-to-analog converter circuit in the camera, as well as the cost of an analog-to-digital converter circuit in the adapter board coupled to the digital camera. However, if there is no analog-to-digital converter present in the adapter board, a second analog camera or videocassette recorder cannot be connected to the adapter board.

It is an object of the present invention to provide a system that accepts multiple analog video sources in a cost-effective manner.

According to a first aspect of the present invention there is provided a video teleconferencing system, comprising: a first computer connected to a remotely located second computer via a communications link; a first video camera, coupled to said first computer, for generating first video images for transmission to the remotely located second computer, characterized in that the first video camera comprises an input jack for accepting analog video signals from an external source; and a second video camera, coupled to said input jack of said first video camera, for generating second video images for transmission to the remotely located second computer.

According to a second aspect of the present invention there is provided a digital camera, for use in a system according to claim 1, the camera comprising: a solid-state image sensing device for converting light to first analog video signals; an input jack for accepting second analog video signals from an external source; a control signal for indicating a selection between the first and second analog video signals; an analog video multiplexor, controlled by the control signal, for selecting between the first and second analog video signals; (e) an analog-to-digital converter (ADC) circuit for converting the selected analog video signals from the multiplexor into digital signals; and (f) a digital signal processor (DSP) (34) for processing the digital signals from the ADC.

According to the third aspect of the present invention there is provided a method of creating video images in a video camera for use in a system according to claim 1 the method comprising the steps of: (a) converting light to first analog video signals using a solid-state image sensing device;
(b) accepting second analog video signals from an external source via an input jack; (c) indicating a selection between the first and second analog video signals using a control signal; (d) selecting between the first and second analog video signals according to the control signal using an analog video multiplexor; (e) converting the selected analog video signals from the multiplexor into digital signals using an analog-to-digital converter (ADC) circuit; and (f) processing the digital signals from the ADC using a digital signal processor (DSP).

An advantage of the present invention is that it saves the cost of an analog to digital converter on the adapter board by using an analog to digital converter and digital signal processor that already exist in the digital video camera.

Another advantage of the present invention is that it generates direct digital output and thus reduces the cost of video systems by allowing the digital video camera to interface directly to the adapter board. Such direct interfacing eliminates the cost of a digital-to-analog converter circuit in the camera, as well as the cost of an analog-to-digital converter circuit in the adaptor board.

Still another advantage of the present invention is its application to video teleconferencing systems. In such a system, two video cameras are used, wherein the first camera is mounted on the computer, so that images of an operator of the computer can be generated, and the second camera is mounted on a stand, so that images of documents and other objects can be generated. The second camera is coupled to an input jack of the first camera and the first camera is coupled to the adaptor board to process and format video images from the first and second cameras.

An embodiment of the present invention will now be described, by way of example, with reference to the accompanying drawings in which:-
Figure 1 is a block diagram illustrating one possible embodiment of a video teleconferencing system in accordance with the present invention; and
Figure 2 is a block diagram that illustrates one possible configuration of components in a digital camera in accordance with the present invention.

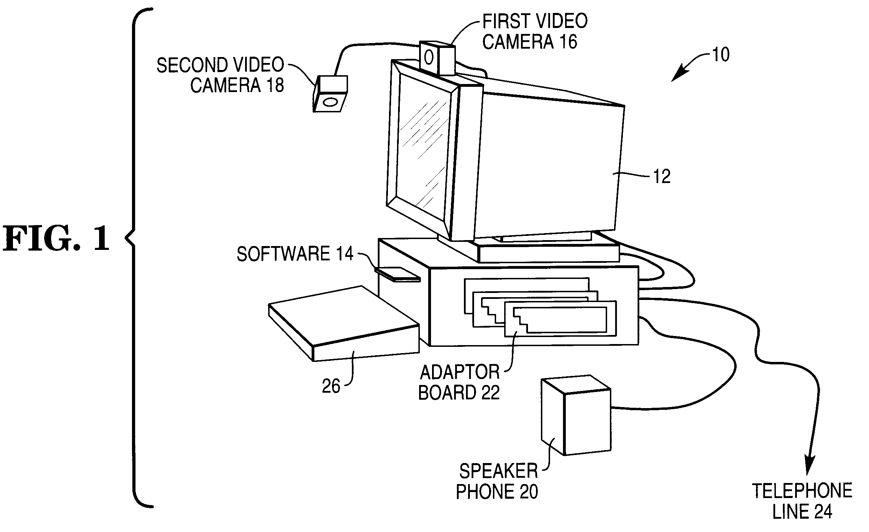

Figure 1 is a block diagram illustrating one possible embodiment of a video teleconferencing system using the present invention. The video teleconferencing system comprises a plurality of personal computers (PCs), each of which is configured in a manner similar to that shown in Figure 1. It is envisioned that attached to each PC 10 will be a monitor 12, AT&T TeleMedia Connection™ software 14, first and second digital video cameras 16 and 18, speaker phone 20, adaptor board 22, and communications link 24. A keyboard 26 is also included in the preferred embodiment. Further, each PC 10 operates under the control of a message-driven multi-tasking, graphical user interface, such as the WINDOWS™ operating system sold by Microsoft Corporation.

The first and second video cameras 16 and 18 preferably each comprise a color charge coupled device (CCD) video camera. Both cameras 16 and 18 may include features such as a fixed focus lens and an in-field indicator to ensure consistent positioning and image quality. The first camera 16 is typically perched on top of the monitor 12, so that the operator of the PC 10 is in its field of view.

The first camera 16 is connected to the adaptor board 22 in the PC 10 that processes and formats the camera output for transmission to a remotely located PC (not shown). Normally, the adapter board 22 has an analog input for accepting analog video signals from the first camera 16, wherein the analog video signals are converted to digital video signals on the adapter board 22, and the digital video signals are then compressed for transmission over the communications link 24 to the remotely located PC.

The adapter board 22 preferably comprises an AT&T Microelectronics AVP-4000 audio/video/data processing system. The AVP-4000 chip set provides video compression/decompression functions that fully comply with the CCITT Px64 video communications standard. In addition, the adaptor board 22 also preferably includes one or more AT&T Microelectronics DSPs that provide support for high quality audio using the G.728 standard, and for high quality images using the JPEG standard.

The present invention envisions the use of the second camera 18 to provide a second video channel for transmission over the communications link 24 to the remotely located PC. For example, the first camera 16 could be used to generate images of the operator of the PC 10, while the second camera 18 is positioned on a stand or other apparatus so as to generate images of documents or other objects. The AT&T TeleMedia Connection^{TM} system can multiplex the output of the second camera 18 with the output of the first camera 16 for transmission to the remotely located PC. However, in the present invention, the second camera 18 is connected to the first camera 16 rather than to the adaptor board 22.

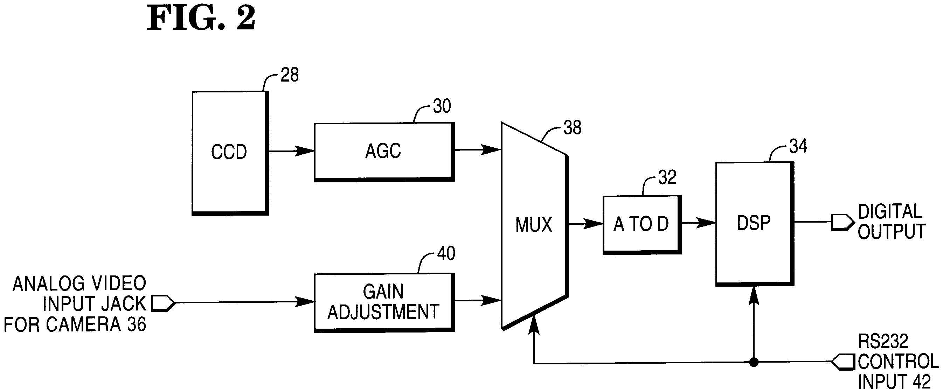

Figure 2 is a block diagram that illustrates one possible configuration of components in a digital camera, i.e., the first camera 16, according to the present invention. The camera 16 has a solid-state image sensing device such as a charge coupled device (CCD) 28. The CCD 28 converts light to analog electrical signals. An automatic gain control (AGC) circuit 30 amplifies the output of the CCD 28 to a consistent level. An analog-to-digital converter (ADC) circuit 32 converts the analog output from the CCD 28 into a digital signal that is processed by one or more DSPs 34. The DSP 34 typically provides such functions as gamma-convergence, image enhancement, encoding, and other functions. The DSP 34 eliminates most of the adjustments found in analog camera designs and thus is capable of reducing the cost of the camera. The output of the DSP 34 comprises a digital bit stream of packets of video image data and associated camera status data packets in a known format. Normally, the digital bit stream would be converted into analog signals using a digital-to-analog convertor (DAC) circuit (not shown) and then communicated to the adaptor board 22. Normally, the adaptor board 22 would incorporate an ADC circuit (not shown) for converting these analog signals back into a digital bit stream.

The present invention envisions that, to reduce cost further, the first camera 16 generates digital output and thus is connected directly to the adaptor board 22. Such a design eliminates the cost of a DAC circuit in the first camera 16, as well as the cost of an ADC circuit in the adapter board 22. However, if there is no ADC present in the adapter board 22, the second analog camera 18 cannot be connected to the adapter board 22. To solve this problem, the first camera 16, which already has an ADC circuit 32 to process the analog output of the CCD 28, provides an external input jack 36 and analog video multiplexor 38 that can accept and select analog video signals from the second camera 18, and then provide this second source of analog video signals to the ADC circuit 32 and the DSP 34 for processing before being fed into the adaptor board 22. A gain adjustment circuit 40 is also provided so that the analog video signals from the external input jack 36 are driven to the appropriate signal levels before being fed into the multiplexor 38. An RS232 control signal 42 is used to command the multiplexor 38 to select the analog video signals output from either the CCD 28 or the external input jack 36. Typically, the RS232 control signal 42 is generated by the DSP 34, the PC 10, a micro-controller (not shown), or other similar device. The output of the multiplexor 38 is converted from analog to digital by the ADC circuit 32 and thereafter input to the DSP 34. The DSP 34 does the appropriate processing on the digitized video signals to generate the desired digital output. Moreover, the DSP 34 may also be controlled by the RS232 control signal 42 in the appropriate manner. The digital output from the DSP 34 is communicated to the adaptor board 22 in the PC 10 that processes and formats the output for transmission to a remotely located PC (not shown). The adapter board 22 has a digital input for accepting the digital output from the first camera 16, wherein the digital output comprises images from both the first and second cameras 16 and 18. The adapter board 22 processes and compresses the digital output for transmission over the communications link 24 to the remotely located PC.

Thus, the present invention provides a solution to handling multiple analog video sources with a low cost adapter board that has no analog input circuit. As a result, the present invention saves the cost of an ADC circuit on the adapter board 22 by using the ADC circuit 32 and DSP 34 that already exist in the first camera 16.

## Claims

1. A video teleconferencing system, comprising: a first computer (10) connected to a remotely located second computer via a communications link (24); a first video camera (16), coupled to said first computer (10), for generating first video images for transmission to the remotely located second computer, characterized in that the first video camera (16) comprises an input jack (36) for accepting analog video signals from an external source; and a second video camera (18), coupled to said input jack (36) of said first video camera (16), for generating second video images for transmission to the remotely located second computer.

2. A system according to claim 1, characterized in that said first and second video cameras (16,18) each comprise a charge coupled device (CCD) video camera.

3. A system according to claim 1 or claim 2, characterized in that said first video camera (16) is mounted on said computer (10) so that images of an operator of the computer can be generated.

4. A system in accordance with any one of the preceding claims, characterized in that said the second video camera (18) is mounted on a stand, so that images of documents and other objects can be generated.

5. A system in accordance with any one of the preceding claims, characterized in that said first video camera (16) is connected to an adaptor board (22) in said first computer (10), said adaptor board (22) comprising means for processing and formatting the first and second video images from said first and second video cameras (16,18) for transmission to said remotely located second computer.

6. A system according to claim 5, characterized in that said adaptor board (22) comprises means for accepting digital input from said first video camera (16), wherein the digital input represents the first video images.

7. A system according to claim 5, characterized in that said digital input represents the first video images.

8. A digital camera (16), for use in a system according to claim 1, the camera (16) comprising: a solid-state image sensing device (28) for converting light to first analog video signals; an input jack (36) for accepting second analog video signals from an external source (18); a control signal (42) for indicating a selection between the first and second analog video signals; an analog video multiplexor (38), controlled by the control signal (42), for selecting between the first and second analog video signals; an analog-to-digital converter (ADC) circuit (32) for converting the selected analog video signals from the multiplexor into digital signals; and a digital signal processor (DSP) (34) for processing the digital signals from the ADC (32).

9. A method of creating video images in a video camera (16) for use in a system according to claim 1, the method comprising the steps of: (a) converting light to first analog video signals using a solid-state image sensing device (28); (b) accepting second analog video signals from an external source (18) via an input jack (36); (c) indicating a selection between the first and second analog video signals using a control signal (42); (d) selecting between the first and second analog video signals according to the control signal (42) using an analog video multiplexor (38); (e) converting the selected analog video signals from the multiplexor (38) into digital signals using an analog-to-digital converter (ADC) circuit (32); and (f) processing the digital signals from the ADC (32) using a digital signal processor (DSP) (34).

10. A method according to claim 9, characterized in that the digital signals output by said DSP (34) are encoded prior to being output by said video camera (16).
